# FASCICULE DE BREVET EUROPEEN

(11) **EP 2 102 082 B1**
(45) Date de publication et mention de la délivrance du brevet: **20.04.2011**
(21) Numéro de dépôt: 07704643.1
(22) Date de dépôt: 19.02.2007
(51) Int. Cl.: B65G 47/14, H05F 3/06

(54) **DISPOSITIF D'ALIMENTATION EN OBJETS NON-CONDUCTEURS PAR BOL VIBRANT**
VORRICHTUNG ZUR ZUFÜHRUNG VON NICHT LEITENDEN OBJEKTEN UNTER VERWENDUNG EINES SCHWINGTOPFS
DEVICE FOR FEEDING NON-CONDUCTING OBJECTS USING A VIBRATORY BOWL

(30) Priorité: 12.12.2006 CH 20212006
(43) Date de publication de la demande: 23.09.2009
(73) Titulaire: Dress Your Body S.A., 2500 Bienne 1 (CH)
(72) Inventeur: WEBER, Laurent, 2034 Peseux (CH)
(74) Mandataire: Surmely, Gérard
(86) Numéro de dépôt international: PCT/EP2007/051564
(87) Numéro de publication internationale: WO 2008/071459

(56) Documents cités:
- JP-A- 9 040 149
- JP-A- 10 167 450

## Description

La présente invention concerne les dispositifs d'alimentation en objets non-conducteurs par un bol vibrant selon le préambule de la revendication 1 et notamment les dispositifs d'alimentation en pierres précieuses ou semi-précieuses par bol vibrant. La présente invention concerne plus particulièrement de tels dispositifs équipés de moyens pour neutraliser ou empêcher l'apparition de charges électrostatiques à la surface des objets non-conducteurs. Un tel dispositif est décrit dans le document JP 09 040 149 A.

Des dispositifs d'alimentations en petits objets ou pièces à partir d'un bol vibrant sont déjà connus. Dans ces dispositifs de l'art antérieur, les objets ou pièces arrivent en vrac dans le fond du bol vibrant. Bien que l'agitation communiquée par les vibrations du bol aux objets soit largement aléatoire, ceux-ci tendent à être repoussés vers la périphérie où ils finissent par trouver l'entrée d'une rampe ascensionnelle d'évacuation. Cette rampe périphérique qui a souvent la forme d'un chemin hélicoïdal aménagé dans le bord intérieur du bol, a pour fonction de guider les objets, un à un, vers une ouverture formée dans la paroi. Sous l'effet des vibrations, les objets sont finalement éjectés du bol par cette ouverture, et tombent l'un après l'autre sur un élément transporteur généralement constitué par un tapis roulant ou un plateau tournant.

Un problème connu des dispositifs d'alimentation par bol vibrant est lié à un effet secondaire des vibrations prévues pour agiter les objets contenus dans le bol. En effet, lorsque des petits objets formés d'un matériau non-conducteur sont amenés à s'entrechoquer de manière répétée, ils ont tendance à se charger d'électricité statique. Cette électricité statique est souvent suffisante pour contrecarrer l'effet des vibrations et faire adhérer les objets les uns aux autres. Ce qui a pour effet d'entraîner des interruptions de l'alimentation et donc une réduction considérable de la cadence d'alimentation. De plus les objets ont tendance à conserver leur charge électrostatique même après avoir quitté le bol vibrant. Cette électricité statique peut donc également s'avérer une source de problèmes plus en aval dans la chaîne des opérations.

Dans le but de remédier au problème qui vient d'être mentionné, le document de brevet JP19950187482 propose de neutraliser les charges électrostatiques indésirables en soufflant de manière continue de l'air ionisé en direction de l'intérieur du bol. Bien que la solution proposée permette de remédier partiellement au problème décrit plus haut, cette solution ne supprime pas complètement le problème.

Un but de la présente invention est donc de fournir une solution plus efficace au problème de l'accumulation d'électricité statique dans les dispositifs d'alimentation par bol vibrant. Elle atteint ce but en fournissant un dispositif d'alimentation conforme à la revendication 1.

Selon la présente invention, les moyens humidificateurs fournissent l'air humide contenant de la vapeur chaude directement aux moyens d'ionisation. De cette manière, c'est l'air humide lui-même qui est ionisé. Ainsi, les molécules de vapeurs sont parfaitement mélangées à l'air ionisé. Les essais menés par la demanderesse indiquent que cette caractéristique augmente sensiblement l'efficacité antistatique des moyens d'approvisionnement en air ionisé. On comprendra que cet avantage n'a rien de théorique. Toutefois, d'un point de vue théorique, on peut avancer l'interprétation selon laquelle cet avantage serait dû au fait que les ions et les molécules de vapeurs mélangées à l'air ionisé ont tendance à se lier. Ce phénomène pourrait augmenter ensuite la probabilité que les molécules de vapeur soient attirées par les charges électrostatiques portées par les objets non-conducteurs, et se déposent donc sélectivement à la surface de ces objets. D'autre part, une fois qu'un nombre suffisant de molécules de vapeur adhérent à la surface d'un objet, la présence de ces molécules empêche l'accumulation de nouvelles charges électriques à la surface de l'objet.

D'autres caractéristiques et avantages de la présente invention apparaîtront à la lecture de la description qui va suivre, donnée uniquement à titre d'exemple non limitatif, et faite en référence aux dessins annexés dans lesquels :
la figure 1 est une représentation schématique d'un dispositif automatisé pour le tri des diamants comprenant un mode de réalisation du dispositif d'alimentation selon l'invention ;
la figure 2 est une vue en coupe du dispositif d'alimentation de la figure 1 montrant un mode de réalisation du module antistatique selon la présente invention.

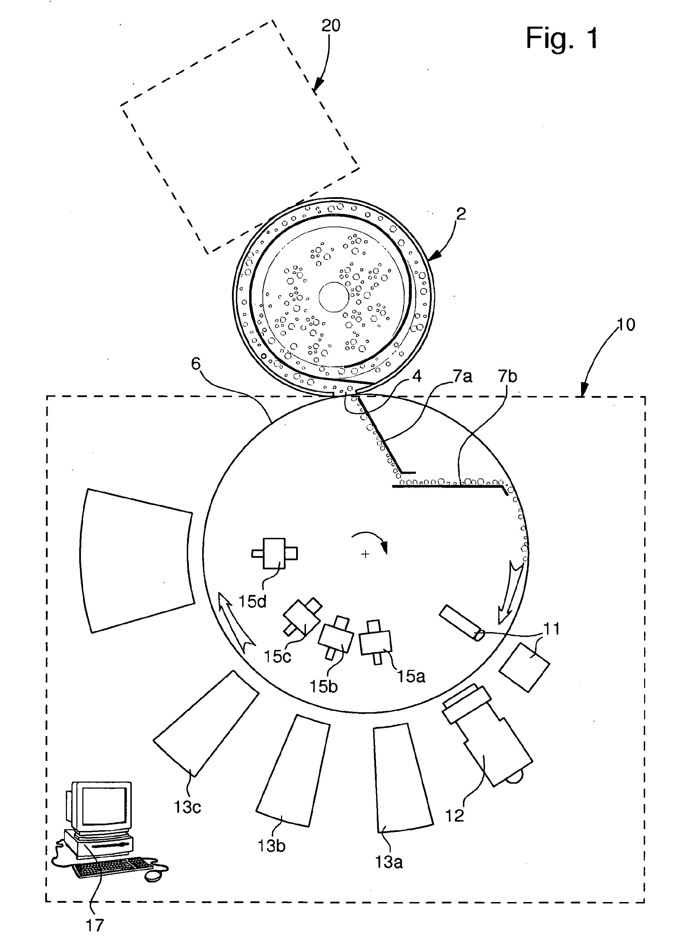

Le dispositif automatisé pour le tri des diamants représenté par le schéma de la figure 1 comprend un bol vibrant 2, un module de tri 10 et un module antistatique 20. Le bol vibrant 2 est prévu pour recevoir des diamants en vrac. De façon connue, les vibrations du bol 2 agitent les diamants (représentés par de petits ovales non-référencés) contenus à l'intérieur de celui-ci. Le module antistatique 10, qui sera décrit plus loin, neutralise ou empêche l'apparition de charges électrostatiques sur les diamants et donc la formation de grappes de pierres. Le bol vibrant 2 comporte une chicane de sortie 4 par laquelle les diamants sont expulsés du bol un à un. En sortant de la chicane les diamants atterrissent sur le plateau en verre 6 d'une table tournante en rotation constante faisant partie du module de tri 10. L'ouverture de la chicane 4 peut être réglée en fonction de la taille des diamants contenus dans le bol, de manière à minimiser la dispersion présentée par la trajectoire des pierres, et de manière à ce que ces dernières s'immobilisent dans la région voulue du plateau. Une fois que les pierres se sont déposées sur le plateau, elles sont entraînées par la rotation de celui-ci dans la direction indiquée par les flèches représentées sur la figure 1.

Le module de tri, qui est délimité sur la figure 1 par un rectangle en traits interrompus et référencé 10, comporte encore plusieurs raclettes 7a, 7b disposées au dessus du plateau et orientée obliquement par rapport à celui-ci interceptent les diamants et les alignent parallèlement au rebord du plateau selon un arc de cercle quasi parfait. Le module de tri 10 comprend encore une unité centrale de commande et de traitement 17, une cellule de détection optique 11, une caméra numérique 12, trois bacs de tri 13a, 13b et 13c, un bac de rejet 14 et, enfin, quatre buses de soufflage 15a, 15b, 15c et 15d.

Le module de tri 10 est prévu pour trier et diriger les diamants vers l'un où l'autre des trois bacs de tri 13a, 13b et 13c selon leur diamètre. Le principe de fonctionnement du module de tri est le suivant, chaque fois que l'unité centrale 17 reçoit un signal de la cellule de détection 11 indiquant le passage d'une pierre, l'unité centrale commande le déclenchement de la caméra 12 pour acquérir une image numérique de cette pierre. A partir de l'image numérisée, l'unité centrale 17 détermine le diamètre de la pierre sur la base d'un algorithme. Pendant ce temps, la pierre poursuit sa course en arc de cercle et arrive en face des trois bacs de tri 13a, 13b et 13c. On voit que les trois buses de soufflage 15a, 15b et 15c font respectivement face aux trois bacs 13a ,13b et 13c. Selon le diamètre de la pierre, l'unité centrale, commande l'émission d'un jet d'air par l'une des buses de soufflage 15 au moment où la pierre passe entre celle-ci et le bac de tri correspondant 13. Le jet d'air émis par la buse de soufflage 15 fait tomber la pierre dans le bac qui correspond à son diamètre. Si pour une raison ou pour une autre, le diamètre d'une pierre n'a pas pu être déterminé, ou si ce diamètre est en dehors des limites admises, l'unité centrale 10 commande la buse de soufflage 15d de manière à faire tomber cette pierre dans le bac de rejet 14.

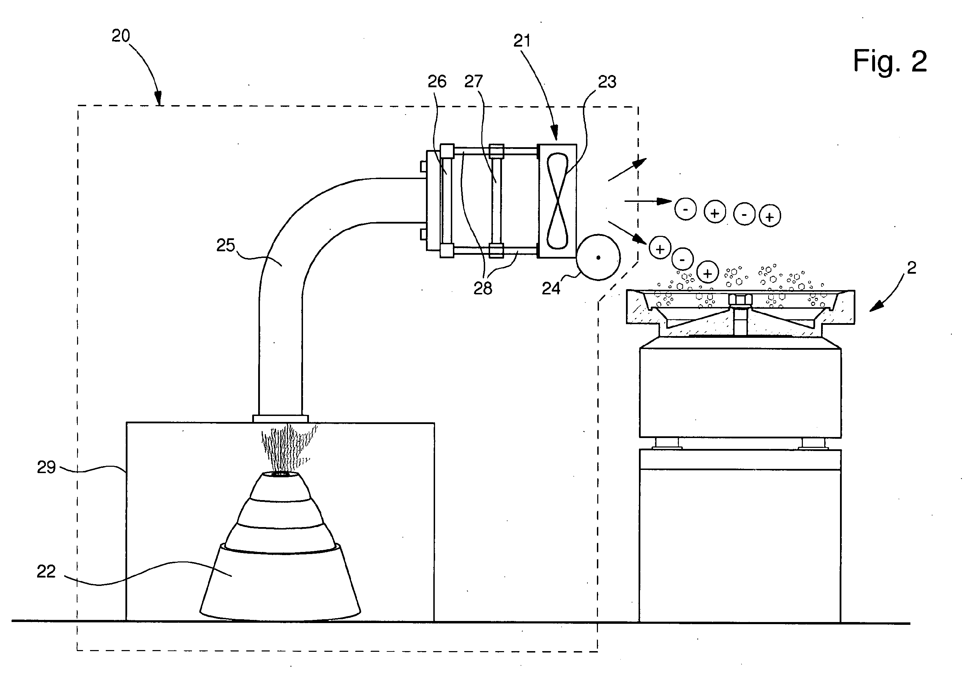

La figure 2 est une vue en coupe montrant le bol vibrant 2 ainsi qu'un module antistatique (référencé 20) comprenant un humidificateur d'air à vapeur chaude 22 installé dans un enceinte 29. Un tuyau 25 d'évacuation de l'air humide reliant l'enceinte 19 à l'entrée d'air d'un ioniseur 21 et, enfin, deux filtres 27 et 28 intercalés entre la sortie du tuyau 25 et l'ioniseur 21.

L'humidificateur 22 peut être un humidificateur d'appartement à vapeur chaude de type courant. Par exemple, un humidificateur à vapeur chaude du modèle V745A de la marque « Vicks », qu'il est notamment possible de commander sur « internet ». La vapeur produite par l'humidificateur 22 est aspirée à travers le tuyau 25 d'évacuation de l'air humide. En sortant du tuyau, l'air humide passe à travers un filtre fixe 26 qui est monté dans un cadre fixé directement sur l'embouchure du tuyau 25. Le filtre fixe 26 est d'autre part maintenu solidaire de la face arrière de l'ioniseur 21 par quatre tiges en métal (dont deux visibles sur la figure 3 sont référencés 28). Les tiges 28 sont dimensionnées de manière à créer un espace d'environ 7 à 8 cm entre le filtre 26 et l'entrée d'air du ioniseur 21. Un filtre mobile 27 est monté dans l'espace entre le filtre fixe 26 et l'ioniseur 21. Le filtre mobile 27 est fixé dans un cadre qui est, lui-même, monté coulissant sur les tiges 28 qui jouent donc pour lui le rôle de glissières. Ainsi le filtre mobile 27 et son cadre peuvent être réglés en les déplaçant entre un position où le cadre appuie contre la face arrière du ioniseur 21 et une position dans laquelle le filtre et le ioniseur sont séparés par un intervalle de quelques centimètres. Dans cette dernière position, l'interstice entre le cadre du filtre mobile 27 est la face arrière du ioniseur 21 forme une ouverture radiale permettant à de l'air ambiant de se mélanger à l'air humide fourni à travers le tuyau 25.

Les filtres 26 et 27 peuvent être de type tout à fait courant. Par exemple des filtres en polyester pour hotte aspirante. De tels filtres en polyester prévus pour être découpés aux dimensions voulues sont notamment distribués en Suisse par Migros-Genossenschafts-Bund, CH-8031 Zürich. L'ionisateur 21 est essentiellement constitué d'un ventilateur 23 associé à un générateur d'ions 24. Le ventilateur incorporé dans l'ioniseur 21 est prévu pour aspirer de l'air par une ouverture aménagée dans la face arrière du ioniseur. En traversant l'ioniseur, l'air interagit avec les ions produit par le générateurs d'ions 24 et devient conducteur en se chargeant en ions « + » et « - ». L'air ionisé est ensuite soufflé par une ouverture aménagée à l'avant du ioniseur. L'ioniseur 21 est de préférence un modèle prévu pour permettre de régler la vitesse de l'air, comme par exemple le modèle « Ion Air Blower » de la marque Haug North America qu'il est possible de commander sur internet.

Le procédé de neutralisation des charges électrostatique mis en oeuvre dans le module antistatique 20 est le suivant. L'humidificateur 22 produit de la vapeur chaude qui se mélange à l'air contenu dans l'enceinte 29. Cet air chaud humide est conduit jusqu'aux filtres 26 et 27 placés à l'entrée de l'ioniseur 21. Ces deux filtres capturent toutes les gouttes d'eau formées par la condensation de la vapeur contenue dans l'air humide. L'air humide filtré est ensuite aspiré par l'ioniseur 21. Selon la distance séparant le filtre réglable 27 de la face arrière de l'ioniseur, une quantité plus ou moins importante d'air ambiant est également aspirée par l'ioniseur 21. En réglant le filtre 27, on ajuste donc le taux d'humidité dans l'air fourni au ioniseur, de manière à maintenir ce taux d'humidité relative de préférence entre 48 et 75%. En traversant l'ioniseur 21, l'air plus ou moins humide s'ionise. C'est air ionisé est ensuite soufflé dans le bol vibrant 2 où il peut neutraliser les charges électrostatiques portées par les diamants. L'opérateur consulte un hygromètre (non représenté) installé à la périphérie du bol vibrant de manière à contrôler le taux d'humidité dans le bol vibrant. Si ce taux s'écarte trop d'une valeur désirée, l'opérateur peut corriger en déplaçant le filtre 27 et en ajustant la vitesse de l'air soufflé par l'ioniseur 21. Un thermomètre (non représenté) peut d'autre part être prévu pour contrôler la température au dessus du bol. Cette température devrait de préférence être comprise entre 20° et 27° Celsius. L'ajustement de cette température peut être obtenu par exemple en adaptant, à l'aide de moyens connus, la température ambiante dans le local dans lequel est installé le dispositif selon la présente invention.

On comprendra finalement que diverses modifications et/ou améliorations évidentes pour un homme du métier peuvent être apportées au mode de réalisation qui fait l'objet de la présente description sans sortir du cadre de la présente invention définie par les revendications annexées.

## Revendications

1. Dispositif d'alimentation en objets non-conducteurs comprenant un bol vibrant (2) et des moyens transporteurs (6), le bol vibrant étant prévu pour recevoir lesdits objets non-conducteurs en vrac et pour les fournir un par un aux moyens transporteurs (6), le dispositif d'alimentation comprenant encore des moyens ioniseurs (21) prévus pour aspirer de l'air par une première ouverture et pour fournir de l'air ionisé au bol vibrant (2) par une seconde ouverture, de manière à neutraliser l'accumulation de charges électrostatiques sur les objets non-conducteurs contenus dans ledit bol, le dispositif d'alimentation étant **caractérisé en ce qu'**il comprend encore des moyens humidificateurs (22, 25, 26, 27 ,29) prévus pour fournir de l'air humide contenant de la vapeur chaude aux moyens ioniseurs (21) par ladite première ouverture.

2. Dispositif d'alimentation selon la revendication 1, **caractérisé en ce que** les objets non-conducteurs sont des pierres précieuses ou semi-précieuses.

3. Dispositif d'alimentation selon la revendication 2, **caractérisé en ce que** les pierres précieuses ou semi-précieuses sont des diamants.

4. Dispositif selon la revendication 2 ou 3 **caractérisé en ce que** les pierres ont un diamètre compris entre 0,8 et 4 mm.

5. Dispositif d'alimentation selon l'une des revendications précédentes, **caractérisé en ce que** les moyens humidificateurs (22, 25, 26, 27 ,29) comprennent au moins un premier filtre (27) prévu pour éliminer la condensation pouvant être présente dans l'air humide.

6. Dispositif d'alimentation selon la revendication 5, **caractérisé en ce que** ledit premier filtre (27) est disposé en regard de ladite première ouverture des moyens d'ionisation (21).

7. Dispositif d'alimentation selon la revendication 6, **caractérisé en ce que** ledit premier filtre (27) est déplaçable entre une première position dans laquelle il ferme ladite première ouverture et une deuxième position dans laquelle un espace entre ledit premier filtre et les moyens d'ionisation (21) permet à de l'air ambiant de se mélanger à l'air humide fourni par les moyens humidificateurs (22, 25, 26, 27 ,29) aux moyens d'ionisation.

8. Dispositif d'alimentation selon la revendication 5, 6 ou 7, **caractérisé en ce que** les moyens humidificateurs (22, 25, 26, 27 ,29) comprennent encore un deuxième filtre (26) installé immédiatement en amont du premier filtre (27).

9. Dispositif d'alimentation selon l'une des revendications précédentes, **caractérisé en ce que** la température de l'air ionisé humidifié est comprise entre 20 et 27 degrés Celsius.

10. Dispositif d'alimentation selon l'une des revendications précédentes, **caractérisé en ce que** le taux d'humidité relative de l'air fourni par les moyens d'ionisation est compris entre 48 et 75%.

## Claims

1. Feed device for non-conductive objects including a vibratory bowl feeder (2) and conveyor means (6), the vibratory bowl feeder being provided for receiving said non-conductive objects in bulk and for supplying them one-by one to the conveyor means (6), the feed device further including ioniser means (21) provided for drawing in air through a first opening and for supplying ionised air to the vibratory bowl feeder (2) through a second opening, so as to neutralise the accumulated electrostatic charges on the non-conductive objects contained in said bowl feeder, the feed device being **characterized in that** it further includes humidifier means (22, 25, 26, 27, 29) provided for supplying humid air containing hot steam to the ioniser means (21) through said first opening.

2. Feed device according to claim 1, **characterized in that** the non-conductive objects are precious or semi-precious stones.

3. Feed device according to claim 2, **characterized in that** the previous or semi-precious stones are diamonds.

4. Device according to claim 2 or 3, **characterized in that** the diameter of the stones is between 0.8 and 4 mm.

5. Feed device according to any of the preceding claims, **characterized in that** the humidifier means (22, 25, 26, 27, 29) includes at least a first filter (27) provided for removing any condensation present in the humid air.

6. Feed device according to claim 5, **characterized in that** said first filter (27) is arranged opposite said first opening in the ioniser means (21).

7. Feed device according to claim 6, **characterized in that** said first filter (27) can be moved between a first position in which it closes said first opening and a second position in which a space between said first filter and the ioniser means (21) allows ambient air to mix with the humid air supplied by the humidifier means (22, 25, 26, 27, 29) to the ioniser means.

8. Feed device according to claim 5, 6 or 7, **characterized in that** the humidifier means (22, 25, 26, 27, 29) also include a second filter (26) arranged immediately upstream of the first filter (27).

9. Feed device according to any of the preceding claims, **characterized in that** the temperature of the humidified ionised air is between 20 and 27 degrees Celsius.

10. Feed device according to any of the preceding claims, **characterized in that** the relative humidity rate of the air supplied by the ioniser means is between 48 and 75%.

## Patentansprüche

1. Vorrichtung für die Versorgung mit nicht leitenden Objekten, die eine vibrierende Schale (2) und Transportmittel (6) umfasst, wobei die vibrierende Schale vorgesehen ist, um die nicht leitenden Objekte lose aufzunehmen und um sie einzeln den Transportmitteln (6) zuzuführen, wobei die Versorgungsvorrichtung außerdem Ionisierungsmittel (21) umfasst, die dazu vorgesehen sind, Luft durch eine erste Öffnung anzusaugen und ionisierte Luft durch eine zweite Öffnung zu der vibrierenden Schale (2) zu liefern, um die Ansammlung elektrostatischer Ladungen auf den in der Schale enthaltenen nicht leitenden Objekten zu neutralisieren, wobei die Versorgungsvorrichtung **dadurch gekennzeichnet ist, dass** sie außerdem Befeuchtungsmittel (22, 25, 26, 27, 29) umfasst, die dazu vorgesehen sind, feuchte Luft, die heißen Dampf enthält, durch die erste Öffnung zu den Ionisierungsmitteln (21) zu liefern.

2. Versorgungsvorrichtung nach Anspruch 1, **dadurch gekennzeichnet, dass** die nicht leitenden Objekte Edelsteine oder Halbedelsteine sind.

3. Versorgungsvorrichtung nach Anspruch 2, **dadurch gekennzeichnet, dass** die Edelsteine oder Halbedelsteine Diamanten sind.

4. Vorrichtung nach Anspruch 2 oder 3, **dadurch gekennzeichnet, dass** die Steine einen Durchmesser im Bereich von 0,8 bis 4 mm haben.

5. Versorgungsvorrichtung nach einem der vorhergehenden Ansprüche, **dadurch gekennzeichnet, dass** die Befeuchtungsmittel (22, 25, 26, 27, 29) wenigstens einen ersten Filter (27) umfassen, der vorgesehen ist, um die Kondensation, die in der feuchten Luft vorhanden sein kann, zu entfernen.

6. Versorgungsvorrichtung nach Anspruch 5, **dadurch gekennzeichnet, dass** der erste Filter (27) gegenüber der ersten Öffnung der Ionisierungsmittel (21) angeordnet ist.

7. Versorgungsvorrichtung nach Anspruch 6, **dadurch gekennzeichnet, dass** der erste Filter (27) zwischen einer ersten Postition, in der er die erste Öffnung verschließt, und einer zweiten Postition, in der ein Zwischenraum zwischen dem ersten Filter und den Ionisierungsmitteln (21) ermöglicht, dass sich Umgebungsluft mit der von den Befeuchtungsmitteln (22, 25, 26, 27, 29) zu den Ionisierungsmitteln gelieferten feuchten Luft mischt, verlagerbar ist.

8. Versorgungsvorrichtung nach Anspruch 5, 6 oder 7, **dadurch gekennzeichnet, dass** die Befeuchtungsmittel (22, 25, 26, 27, 29) außerdem einen zweiten Filter (26) umfassen, der direkt stromaufseitig des ersten Filters (27) installiert ist.

9. Versorgungsvorrichtung nach einem der vorhergehenden Ansprüche, **dadurch gekennzeichnet, dass** die Temperatur der befeuchteten ionisierten Luft im Bereich von 20 bis 27 Grad Celsius liegt.

10. Versorgungsvorrichtung nach einem der vorhergehenden Ansprüche, **dadurch gekennzeichnet, dass** die relative Feuchtigkeit der von den Ionisierungsmitteln gelieferten Luft im Bereich von 48 bis 75 % liegt.
